**Europäisches Patentamt**

**European Patent Office**

**Office européen des brevets**

(19)

(11) Veröffentlichungsnummer: **0 417 064 A2**

# (12) EUROPÄISCHE PATENTANMELDUNG

(21) Anmeldenummer: 90890258.8

(22) Anmeldetag: 06.09.90

(51) Int. Cl.5: **C04B 40/00, C04B 28/02**

(30) Priorität: 06.09.89 AT 2086/89

(43) Veröffentlichungstag der Anmeldung:
**13.03.91 Patentblatt 91/11**

(84) Benannte Vertragsstaaten:
**BE CH DE DK ES FR GB GR IT LI LU NL SE**

(71) Anmelder: **ASAMER & GROSS TRANSPORTBETON Gesellschaft m.b.H.**
**Wildpretstrasse 1**
**A-1110 Wien(AT)**

(72) Erfinder: **Howanietz, Friedrich, Dr.**
**Bahnstrasse 3**
**A-2261 Angern/March(AT)**

(74) Vertreter: **Widtmann, Georg**
**Clusiusgasse 2/8**
**A-1090 Wien(AT)**

(54) **Bauteil, Verfahren zur Herstellung eines Bauteiles, Mischung sowie Zement zur Herstellung der Mischung und des Bauteiles.**

(57) Bauteil mit einer Mischung mit einem hydraulischen Bindemittel mit Zement, z. B. Portlandzement, Hochofenzement od. dgl., gegebenenfalls einem latenthydraulischen Bindemittel, z. B. Flugasche, mit Verflüssiger und/oder Dispergator in einer Menge von über 4 Gew.-%, vorzugsweise über 5 Gew.-%, bezogen auf den eingesetzten Zement, Zuschlägen, insbesondere mit einem Größtkorn von 18 bis 50 mm, gegebenenfalls mit einer Bewehrung aus Stahl, Fasern, Kunststoff, wobei der Bauteil mit einer durch Rütteln verdichteten Mischung aufgebaut ist und eine Kapillaraszension von 0,1 bis 1,2 Vol.-%, insbesondere 0,4 bis 0,6 Vol.-%, aufweist.

EP 0 417 064 A2

# BAUTEIL, VERFAHREN ZUR HERSTELLUNG EINES BAUTEILES, MISCHUNG SOWIE ZEMENT ZUR HERSTELLUNG DER MISCHUNG UND DES BAUTEILES

Die Erfindung bezieht sich auf einen Bauteil, der mit Beton hergestellt wird sowie ein Verfahren zur Herstellung des Bauteiles als auch eine Mischung, mit dem der Bauteil hergestellt werden kann sowie einen Zement zur Herstellung einer derartigen Mischung für einen derartigen Bauteil.

Der Beton stellt einen Baustoff dar, der aufgrund seiner hohen Druckfestigkeit und auch der weit entwickelten Technologie zur Verarbeitung desselben ein sehr großes Anwendungsgebiet gefunden hat. Der hohen Druckfestigkeit steht eine relativ geringe Zugfestigkeit gegenüber, die entweder dadurch kompensiert werden kann, daß Bewehrungen, insbesondere Bewehrungen aus Stahl, vorgesehen werden, wobei dann der Stahl die Zugkräfte aufnimmt, oder es werden auf den Beton bereits Druckkräfte aufgebracht, die bei Einwirkung von Zugkräften vorerst kompensiert werden müssen, in diesem Falle liegen Spannbetonkonstruktionen vor. Durch diese Maßnahmen können somit die geringeren Zugfestigkeiten im wesentlichen kompensiert werden. Die Haltbarkeit der Stahlbewehrungen im Beton hängt aber davon ab, daß diese nicht korrodieren. Ein derartiges Korrodieren tritt dann ein, wenn das den Stahl umgebende Medium einen pH-Wert kleiner als 8 einnimmt. Dieser Vorgang, so lediglich die Atmosphäre der Verursacher ist, nennt man eine Karbonatisierung, wobei $CO_2$ von der Atmosphäre über die im Beton vorliegenden Kapillaren eintritt und so eine Verschiebung des pH-Wertes im Beton bedingt, wodurch, insbesondere unter Einwirkung von Wasser, Eisenhydroxyde entstehen, die ein größeres Volumen aufweisen, als der Stahl ursprünglich benötigt hat, so daß es zu den bekannten Abplatzungen an Bauwerken kommt. Die Sanierung derartiger Abplatzungen ist besonders aufwendig, da einerseits die karbonatisierten Betonteile entfernt werden müssen und anderseits die Bewehrungen, beispielsweise durch Sandstrahlen, u. zw. allseitig, von der übermäßigen Rostschichte befreit werden müssen, worauf ein Reparaturmörtel angebracht wird.

Um die Alkalität des Betons trotz Karbonatisierung auf längere Zeit zu erhalten, wurde bereits vorgeschlagen, in den Beton grobkörnigen Zement vorzusehen, welcher bei Mischvorgang nicht vollkommen zur Reaktion gebracht wird und sodann im Laufe des Einsatzes als Alkalispender dienen kann. Eine derartige Vorgangsweise führt zwar zu einer Verbesserung, jedoch sind die großen Zementkörner Schwachstellen innerhalb des gesamten Baustoffes.

Ein weiteres Phänomen, das bei Betonbauwerken auftritt, welches besonders bei Bauwerken, z. B. Fahrbahnen, welche eine Stahlbewehrung aufweisen, negativ ist, besteht darin, daß Chloridionen durch den Beton bis zu der Bewehrung gelangen und hier ebenfalls für Korrosionen verantwortlich sind.

Eine weitere Eigenschaft des Betons ist die eingeschränkte Frostbeständigkeit bei Einwirkung von Wasser. Hiezu wurden ausführliche Entwicklungsarbeiten durchgeführt, wobei eine gezielte künstliche Mikroluftporenverteilung zur Unterbrechung der Saugfähigkeit der Kapillaren im Beton angestrebt wurde, und die Poren eine Mindestgröße aufzuweisen haben.

Im modernen Baugeschehen wird bei Herstellung von Beton mit Betonverflüssigern, aus natürlichen Ligninsulfonaten oder Syntheseprodukten, mit vier Zielrichtungen vorgegangen.

1. Beton der gleichen Güteklasse kann wie folgt erhalten werden: Durch das Mischungsverhältnis wird die Betondruckfestigkeit und die Verarbeitbarkeit festgelegt. Jede Veränderung der Konsistenz in Richtung zu dem flüssigen Bereich erfordert zur Beibehaltung der gleichen Druckfestigkeit nicht nur die Erhöhung der Wasser-, sondern auch der Bindemittelmenge. Durch Plastifizierer kann die Konsistenz, wenn auch im engen Bereich, maximal um 2 Konsisstenzklassen verbessert werden, ohne den Wasser- und Bindemittelanteil zu erhöhen.

2. Beim festgelegten Mischungsverhältnis mit der gewünschten Verarbeitungskonsistenz kann umgekehrt Bindemittel dadurch eingespart werden, daß entsprechend dem verflüssigenden Effekt die Wassermenge reduziert wird; damit aber auch die Bindemittelmenge, womit gleicher Wasser/Zement-Wert und damit die gleiche Festigkeit erhalten werden kann.

3. Beim Fließbeton wird, entsprechend der erforderlichen Festigkeitsklasse, ein Mischungsverhältnis erstellt, dessen Verarbeitungskonsistenz K 2 beträgt. Nur durch die Zugabe von meistens synthetischen Produkten in unterschiedlicher Wirkstoffmenge, wird, ohne das Mischungsverhältnis zu verändern, die Verarbeitung um mindestens 12 cm, bezogen auf das Ausbreitmaß, erhöht, darf aber umgekehrt ein Ausbreitmaß von 60 cm nicht überschreiten.

4. Beim Straßensonderbeton wird, entsprechend den Richtlinien, das Betonmischungsverhältnis konzipiert. Da Straßenbeton durch Fertigungseinheiten erzeugt wird, ist dieser Beton hinsichtlich Konsistenz im steifen bis plastischen Bereich, natürlich auch um die Bindemittelmenge zu begrenzen (Risseanfälligkeit). Bei felderweisem Einbau muß die Konsistenz, ohne Veränderung der Rezeptur, verbessert werden. Dies erfolgt durch Zugabe von Superplastifizierer.

Die oben angeführten Maßnahmen betreffen alle Nassenbetone mit den üblichen Wasser/Zement-Werten von 0,80 bis 0,42 und Verdichtung durch Rütteln.

Weiters ist es auch bereits bekannt geworden, einer bereits eingebauten und in Erhärtung befindenden Mischung Wasser zu entziehen. Durch den Verdichtungsvorgang gelangen die mit dem Wasser angereicherten Schichten an die Oberfläche mit wesentlich geringerer Druckfestigkeit als im Kern. Durch den Wasserentzug entstehen daher druckfestere Oberflächenschichten.

Die vorliegende Erfindung hat sich zum Ziel gesetzt, einen Bauteil, der mit Beton aufgebaut ist, zu schaffen, welcher eine hohe Frostbeständigkeit, eine hohe Sicherheit gegen Karbonatisierung aufweist, und dessen nicht abgebundene Mischung eine industrielle Verarbeitbarkeit durch Rütteln gestattet und weiters einen Zement zu schaffen, der eine besonders vereinfachte und sichere Verfahrensweise zur Herstellung der erfindungsgemäßen Mischung und des erfindungsgemäßen Bauteiles gestattet.

Der erfindungsgemäße Bauteil mit einer Mischung mit einem einem hydraulischen Bindemittel mit Zement, z. B. Portlandzement, Hochofenzement, gegebenenfalls einem latenthydraulischen Bindemittel, z. B. Flugasche od. dgl., mit Verflüssigern und/oder Dispergatoren in einer Menge von über 4 Gew.-%, vorzugsweise über 5 Gew.-%, bezogen auf den eingesetzten Zement, Zuschlägen, insbesondere mit einem Größtkorn von 18 bis 50 mm, gegebenenfalls mit einer Bewehrung aus Stahlfasern, Kunststoff od. dgl., besteht im wesentlichen darin, daß der Bauteil mit einer durch Rütteln verdichteten Mischung aufgebaut ist und eine Kapillaraszension von 0,1 bis 1,2 Vol.-%, insbesondere 0,4 bis 0,6 Vol.-%, aufweist.

Es hat sich völlig überraschend herausgestellt, daß bei einem Beton mit einem derartig geringen Anteil von durchgehenden offenen Kapillaren sowohl die Beständigkeit gegen Karbonatisierung als auch die Frostbeständigkeit unerwartet hoch gehalten werden kann. Nach Erkenntnis dieser Phänomene kann als Erklärung dafür angenommen werden, daß sowohl das Wasser, z. B. bei Niederschlägen, als auch das $CO_2$ bevorzugt über die durchgehenden Kapillaren in den Beton und so auch gegebenenfalls zu der Stahlbewehrung gelangt, so daß eine vorzeitige Zerstörung bedingt ist. Auch kann das Wasser, z. B. Niederschlagswasser, in den Beton nicht aufgesaugt werden, so daß es lediglich an der Oberfläche verbleibt, wodurch auch keine Schäden durch die Volumszunahme beim Frieren des Wassers auftritt. Wesentlich ist auch weiterhin, daß die Konsistenz der Mischung bei der Verarbeitung derart ist, daß eine Verdichtung durch Rütteln erfolgt, da dadurch einerseits Bauteile erstellt werden können. die auf industrielle Weise erzeugt werden, wobei großvolumige Bauwerke, beispielsweise Brücken, Hochhäuser, Straßen u. dgl. nach herkömmlichen Methoden erzeugt werden können.

Enthält der Bauteil 5,0 bis 10,0 Gew.-%, insbesondere 6,0 bis 9,0 Gew.-%, bezogen auf den eingesetzten Zement, Verflüssiger und/oder Dispergatoren, so kann bei bestimmter Steuerung des Verfahrens zur Herstellung des Bauteiles besonders leicht ein Bauteil mit einem geringen Anteil an offenen Kapillaren erhalten werden, wobei die bevorzugte Grenze eine Optimierung des eingesetzten Hilfsmittels, bezogen auf die zu erreichenden Eigenschaften, erlaubt.

Die Mischung kann bis zu 0,5 Gew.-%, bezogen auf das Zementgewicht, natürliche Ligninsulfonate aufweisen. Diese Substanzen weisen ebenfalls sehr gute Eigenschaften als Verflüssiger und Dispergatoren auf, jedoch muß in der Regel ihr Gehalt beschränkt werden, da sie als natürliche Begleitstoffe meist Pentosen aufweisen, die das Erstarrungsverhalten des Betons bis zum Nichterstarren verzögern.

Enthält der Bauteil entsprechend 10,0 bis 20,0 Gew.-%, insbesondere 15,0 bis 17,0 Gew.-%, Portlandzement, bezogen auf den Festbeton, so ist ein Beton mit einer besonders großen Einsatzbreite gegeben.

Wird ein $C_3A$-freier Zement verwendet, so ist einerseits das erwünschte Eigenschaftsprofil bezüglich Poren weiterhin gewährleistet, wobei der Beton als solcher eine besondere Resistenz gegenüber Chlorid- und Sulfationen aufweist.

Weist der Bauteil bis 15 Gew.-% nichtabgebundenen Zement, bezogen auf die Gesamtmenge des eingesetzten Zementes, auf, so ist ein Bauteil gegeben, bei dem die nach Erhärtung auftretende Risse, z. B. aus der Schwindung oder Überbeanspruchung im Gebrauch versintern.

Besonders vorteilhaft können derartige Schäden dadurch geheilt werden, daß der nicht abgebundene Zement pulverförmig und fein verteilt vorliegt.

Das erfindungsgemäße Verfahren zur Herstellung eines Bauteiles, wobei eine Mischung mit einem hydraulischen Bindemittel mit Zement, z. B. Portlandzement, Hochofenzement od. dgl., gegebenenfalls einem latenthydraulischen Bindemittel, z. B. Flugasche, Zuschlägen, insbesondere mit einem Größtkorn von 18 bis 50 mm, Verflüssigern und/oder Dispergatoren mit Wasser abbinden gelassen wird, besteht im wesentlichen darin, daß einer Mischung und/oder zumindest einem Bestandteil derselben, insgesamt, den Wassergehalt der Bestandteile eingeschlossen, bezogen auf den Zement 22,0 bis 28,0 Gew.-% , insbesondere 25,0 bis 27,0 Gew.-% Wasser und 5,0 bis 10,0 Gew.-%, insbesondere 6,0 bis 9,0 Gew.%, Verflüssiger und/oder der Dispergatoren, bezogen auf den Zementgehalt, zugesetzt wird und die so erhaltene Mischung homogenisiert in eine Form, z. B. zweiseitig offene Form, verbracht und durch Rütteln verdichtet und

3

anschließend abbinden gelassen wird.

Die Ursache des Hohlraumgehaltes beim konventionellen Beton entsteht aus dem Mißverhältnis von chemisch gebundenem Wasser, im Vergleich zu der Wassermenge, die für die Verarbeitbarkeit benötigt wird. Werden die normgemäßen Verarbeitungsbereiche eingehalten, wird in allen Fällen für die Verarbeitbarkeit wesentlich mehr Wasser benötigt, als zur Hydratation erforderlich ist. Auch die derzeit höchste Betongüteklasse B 600, mit dem geringsten W/Z-Verhältnis, weist einen Kapillarhohlraumgehalt, nach dem Verdunsten des physikalisch gebundenen Wassers, von noch 6,0 Vol.% auf.

Die durch das physikalisch enthaltene Wasser gebildeten Kapillaren sind auch schlechthin die Ursache für Korrosionsvorgänge, wie das Eindringen von $CO_2$-Gas in die Betonsubstanz, das Eindiffundieren von $SO_2$, aber auch das Aufsaugen von Wasser erlauben. Durch die Umsetzung mit $CO_2$ verschiebt sich die Alkalität in den Neutralbereich, bei Wasserkondensation ist die Rostschutzwirkung für die Bewehrung, wie bereits ausgeführt, nicht mehr gegeben; durch den höheren Volumsbedarf der Umsetzungsprodukte wird der Beton abgesprengt. Die sulfatischen Umsetzungsprodukte führen zum Zertreiben, das aufgesaugte Wasser zu Aufsprengungen, vor allem bei Frostschock durch das Streusalz im Winter.

Alle diese Probleme könnten nicht entstehen, wenn etwa das stöchiometrische Verhältnis zwischen Wasser und Zement eingehalten werden kann. Solche Betone aber waren, vor allem als Massenbeton, durch den erdfeuchten Zustand bei einem W/Z-Wert um 0,27, unverarbeitbar.

Ohne den Bindemittelanteil bei größerem Wasseranspruch zu erhöhen, bei weicherer Konsistenz und gleichem W/Z-Wert, wie es bei der traditionellen Betontechnologie erfolgt, kann im neuen System, bei allen Verarbeitungsklassen, das gewählte Mischungsverhältnis beibehalten werden, somit konstante Bindemittel- und Wassermenge, und es erfolgt die Regelung der Verarbeitungskonsistenz von der Konsistenzklasse K1 = steif, zu K4 = flüssig, nur durch unterschiedliche Mengen an in dem Wasser gelösten synthetischen Chemikalien.

Durch die Erfindung ergibt sich ein völlig neuer Gesichtspunkt bei der Herstellung und somit auch bei dem Endprodukt Beton. Die Wasseraufnahme von einem vorerst bei 105° C auf Gewichtskonstanz getrockneten Beton und anschließend im Wasser gelagerten fällt von rund 9 Vol.-% mindestens auf unter 1,2 Vol.-% und ist durch Eignungsprüfungen, die die unterschiedliche Kornzusammensetzung von Zuschlaglagerstätte zu Lagerstätte berücksichtigen, auf 0,4 bis 0,6 Vol.-% zu beschränken.

Die Eigenschaften des so erhaltenen Betons, mit drastisch vermindertem Kapillarraum, sind: keine Aufnahme von $CO_2$ und $SO_2$ in das Innere und Umsetzungen sind damit nur an der Oberfläche möglich. Durch das Fehlen der Saugfähigkeit ist der Beton praktisch wasserundurchlässig und frostbeständig. Auch der augenscheinliche Eindruck der erhärteten Betonflächen entspricht dem von Naturstein und nicht dem von Kunststein und dies bei konventioneller Verdichtung durch Rütteln. Die zahlreichen normgemäßen Maßnahmen zur Herstellung von wasserundurchlässigem Beton oder Beton, der dem Frost ausgesetzt ist, können damit gänzlich entfallen. Auch hinsichtlich der Festigkeitsentwicklung ergeben sich völlig neue Gesichtspunkte. Da bei ausreichender Verdichtbarkeit die Betondruckfestigkeit vom W/Z-Wert abhängig ist, ergeben W/Z-Werte um 0,25 oder 0,27 an allen Fällen Betondruckfestigkeiten, die weit über dem Stand der derzeitigen praktischen Technik liegen.

Schon die 3- und 7-Tage-Festigkeiten zeigen, je nach verwendeter Zementart, das gleiche Verhalten. Da durch den exothermen Prozeß bei der Zementreaktion Wärme erzeugt wird, dies die Ursache vieler Betonschäden ist, wird der erfindungsgemäße Beton mit den üblichen Bindemittelmengen bei höherem Eigenschaftsniveau gefertigt.

Der neue Beton verhält sich gegenüber der Nacherhärtung, abhängig von der Zeit und der zur Verfügung stehenden Wassermenge, die über die Kapillaren beim bekannten Beton aufgenommen wird, völlig anders. Die Festigkeitszunahme beim traditionellen Beton kann im Laufe der Jahre oft die steinfestigkeit erreichen, unabhängig von der ursprünglichen Druckfestigkeit 28 Tage nach der Erzeugung. Beim neuen Beton, zumindest im Beobachtungszeitraum von 90 Tagen unter Idealbedingungen, Unterwasserlagerung, ist dies nicht möglich. Werden durch Wasserkondensation beim konventionellen Beton weitere Hydratationsvorgänge ermöglicht, wobei je nach Hohlraumgehalt, Wasserangebot und Temperaturlage, zwischen der 28- und 90-Tage-Druckfestigkeit meistens bedeutende Festigkeitsunterschiede feststellbar sind, ist durch das Fehlen der Kapillarporen beim vorliegenden Beton und damit durch den Ausschluß der Wasseraufnahmefähigkeit kein Festigkeitszuwachs möglich.

Erst bei Überschreitung des stöchiometrischen Wasserverhältnisses bei einem W/Z-Wert von 0,28 und der damit verbundenen, wenn auch sehr geringen Kapillarität, aus der Differenz zwischen chemisch gebundenem und physikalisch enthaltenem Wasser, folgt der Erhärtungsprozeß den üblichen Erfahrungen, allerdings in progressiv verlangsamter Form, verursacht durch den äußerst geringen, physikalisch bedingten Kapillarporenanteil und damit geringen Saugfähigkeit.

Da die Korrosionsschutzwirkung der Bewehrung von der Alkalität abhängt, auch deren Menge, kann bewußt das stöchiometrische Verhältnis unterschritten werden; z. B. W/Z-Wert von 0,22 eingehalten werden. Damit ist die Hydratation nur unvollständig, es verbleibt eine Restbindemittelmenge unverbraucht. Der Festigkeits mechanismus ist davon aber nicht betroffen.

Solche Maßnahmen sind von Bedeutung überall dort, wo Beton besonderen Anforderungen ausgesetzt ist, wie z. B. frei bewitterte Decken, deren elastische Verformungen durch Last zu statisch vollkommen bedeutungslosen Rissen führt. Das über die Risse eindringende Wasser aktiviert die nicht hydratisierten Anteile, aber auch das absolute Alkaliangebot ist wesentlich höher.

Bezogen auf den Zementgehalt können bis zu 0,5 Gew.-% natürliche Ligninsulfonate zugegeben werden, die bis zu diesem Prozentsatz ebenfalls als hervorragende Verflüssiger und Dispergatoren dienen.

Für besonders große Bauteile kann es ebenfalls von Vorteil sein, daß die Mischung vor der Formgebung, vorzugsweise während des Mischvorganges, temperiert, insbesondere auf 4° bis 12° C gekühlt wird, wodurch die Störungen, welche durch die exotherme Reaktion des Zementes bedingt sind, auch bei großen Bauteilen besonders gering gehalten werden können.

Wird die Mischung auf 20° bis 35° C temperiert, so kann auch bei Temperaturverlust, z. B. bei ungünstigen Einbautemperaturen, wie Winter, Kühlhäuser od. dgl., ein ausreichend rasches Abbinden erreicht werden.

Eine besonders gute Verteilung der Verflüssiger und/oder Dispergatoren, insbesondere wenn sie bereits als Lösung oder Dispersion vorliegen, ergibt sich dann, wenn diese in Wasser gelöst bzw. dispergiert der Mischung oder einzelnen Bestandteilen derselben zugegeben werden.

Liegen die Dispergatoren und/oder Verflüssiger in fester Form vor, so können diese gemeinsam mit dem Zement zugegeben werden, wobei ebenfalls eine besonders gute Verteilung erhalten wird, und gleichzeitig ein bestimmtes Gewichtsverhältnis zwischen Verflüssiger und Dispergatoren zu dem Zement besonders einfach eingehalten werden kann.

Die erfindungsgemäße Mischung mit einem hydraulischen Bindemittel mit Zement, z. B. Portlandzement, Hochofenzement, gegebenenfalls einem latenthydraulischen Bindemittel, z. B. Flugaschen, od. dgl., Zuschlägen, insbesondere mit einem Größtkorn von 18 bis 50 mm, Verflüssigern und/oder Dispergatoren in einer Menge über 4 Gew.-%, insbesondere vorzugsweise über 5 Gew.-%, bezogen auf den Zementgehalt und Wasser, besteht im wesentlichen darin, daß die Mischung 22,0 bis 28,0 Gew.-%, insbesondere 24,0 bis 27,0 Gew.-%, Wasser, bezogen auf den Zementanteil aufweist und eine Verarbeitbarkeit nach ÖNORM 4200, 10.Teil, in den Konsistenzklassen K1 bis K4 aufweist. Es war durchaus überraschend, daß eine derartige Mischung mit einem so geringen Anteil an Wasser und so hohen Anteil an Verflüssigern und/oder Dispergatoren einerseits den Erfordernissen der industriellen Verarbeitbarkeit entspricht und anderseits dabei ein Produkt entsteht, das im wesentlichen keine Kapillaren aufweist und daß weiters bei einem derartig hohen Anteil von Dispergatoren auch die Anzahl an eingeschlossenen Luftporen, also kugeligen Poren, die in sich geschlossen sind, nieder gehalten werden kann, da diese Poren die Druckfestigkeit des Endproduktes herabsetzen, sind diese ebenfalls unerwünscht.

Der bevorzugte Gehalt an Dispergatoren und Verflüssigern beträgt 5,0 bis 10,0 Gew.-%, insbesondere 6 bis 9 Gew.-%, da in diesen Bereichen die erwünschte Verarbeitbarkeit erreicht werden kann und anderseits eine Optimierung, bezogen auf die einzusetzende Menge bezüglich des Eigenschaftsniveaus, erreicht wird.

Die Mischung kann bis zu 0,5 Gew.-%, bezogen auf den Zementgehalt, natürliche Ligninsulfonate aufweisen, mit welchem Gehalt einerseits noch das erforderliche Erstarrungsverhalten gegeben ist und anderseits das Produkt den erwünschten geringen Gehalt an Kapillaren aufweisen kann.

Als besonders geeignet haben sich Verflüssiger und/oder Dispergatoren aus Naphthalinsulfonsäure-Formaldehydkondensate erwiesen, da diese Produkte in Abhängigkeit von den Reaktionsbedingungen Druck und Temperatur auch in ihren molaren Reaktionsverhältnissen besonders den spezifischen Erfordernissen angepaßt werden können.

Der erfindungsgemäße Zement besteht im wesentlichen darin, daß er 5,5 bis 10,0 Gew.-%, vorzugsweise 6,0 bis 9,0 Gew.-%, an Verflüssigern und/oder Dispergatoren enthält. Ein derartiger Zement bietet den Vorteil, daß zwangsweise ein bestimmtes Verhältnis von Dispergatoren und Verflüssigern zu Zement eingehalten werden muß, so daß, sei es beim Mischwerk oder Vorort, ein bestimmtes Verhältnis zwangsweise eingehalten wird.

Im folgenden wird die Erfindung anhand der Beispiele näher erläutert.

Beispiel 1:

Es wurden in einem Eirich-Zwangsmischer 32,0 kg Portlandzement 375 der Firma Perlmooser, Mannersdorf, mit 183,9 kg getrockneten Zuschlägen der Kornfraktionen 0 bis 4 mm 40 Gew.-%, 4 bis 8 mm 10 Gew.-%, 8 bis 16 mm 20 Gew.-%, 16 bis 32 mm 30 Gew.-%. Diese Mischung wurde sodann 50 Sekunden trocken vorgemischt und unter Zugabe von 19,5 kg Wasser entsprechend einem W/Z-Wert von 0,61 gemischt. Bei der so erhaltenen Mischung wurde das Ausbreitmaß gemäß ÖNORM 4200, 10. Teil, in cm bestimmt. Weiters wurde das Raumgewicht nach 7, 28, 56 und 90 Tagen sowie die Druckfestigkeit nach ÖNORM 3303 bestimmt. Zur Bestimmung der Kapillaraszension wurde nach 28 Tagen weiters die Wasseraufnahme eines Würfels mit 20 cm Kantenlänge derartig bestimmt, daß der Probekörper vorerst 24 Stunden bei 105° C getrocknet wurde, anschließend das Gewicht ermittelt wurde und sodann nach 48 Stunden einer Lagerung im Wasser und anschließenden abtropfen lassen, erneut das Gewicht bestimmt wurde.

Das Gas- und Wasseraufnahmevermögen im Beton ist eine Funktion des Kapillargehaltes. Durch den Mischvorgang, aber auch durch die Kornsieblinie, soweit sie von der Idealsieblinie abweicht, wobei Kornfraktionsanteile im Überschuß vorhanden sind, entstehen meistens im Durchmesser unterschiedliche Poren, die nicht miteinander verbunden sind. Diese sind für Wasser nur dann zugänglich, wenn ein ausreichendes Kapillarsystem diese Poren berührt. Der Kugelporenanteil im Frischbeton liegt erfahrungsgemäß bei 0,5 - 2 Vol.-%.

Der ermittelte Hohlraumgehalt bezieht sich auf den Kapillarporengehalt und Verdichtungsporenhohlraum, also auf das absolute Wasseraufnahmevermögen des jeweiligen Betons.

Die erhaltenen Ergebnisse der Beispiele sind in der Tabelle angeführt.

Beispiel 2:

Es wurde analog Beispiel 1 vorgegangen, wobei 0,64 kg eines Naphthalinsulfonsäure-Formaldehydkondensates zugegeben wurde. Obwohl nur 17,3 kg Wasser, entsprechend einem W/Z-Wert von 0,54, zugegeben wurde, ist das Ausbreitmaß größer, als bei einem Beton ohne Zusatz von Verflüssigern. Die Druckfestigkeit ist gegenüber dem Beispiel 1 leicht erhöht, wohingegen die Wasseraufnahme ebenfalls leicht herabgesetzt ist.

Beispiel 3:

Es wurde analog Beispiel 1 verfahren, wobei 8 kg Wasser, entsprechend einem W/Z-Wert von 0,25, und 1,76 kg des Dispergators gemäß Beispiel 2 zugegeben wurde. Das Ausbreitmaß, also die Konsistenz, entspricht in etwa jener des Beispieles 2, die Druckfestigkeit weist aber bereits nach 7 Tagen einen Wert auf, den die Nullprobe gemäß Beispiel 1 nach 90 Tagen noch nicht aufweist. Ganz signifikant hat sich hingegen die Wasseraufnahmefähigkeit auf ca. 1 % gegenüber der Nullprobe abgesenkt und ebenfalls der Gehalt an durchgehenden Kapillaren auf einen Wert von 1 % reduziert.

Beispiel 4:

Es wurde analog Beispiel 1 verfahren, jedoch als Dispergator ein Phenolformaldehydpolykondensat eingesetzt.

Beispiel 5:

Es wurde analog Beispiel 1 vorgegangen. Als Dispergator diente ein wasserlösliches, niedermolekulares Polyacrylamid mit einem Molekulargewicht größer als 9.000.

Beispiel 6:

Beim Mischbindemittel aus Portlandzement und latenthydraulisch reagierender Flugasche als Kieselsäurelieferant diente als Dispergator ein Naphthalinformaldehydpolykondensat mit einem Molekulargewicht größer als 20.000. Die Festigkeitsentwicklung unter diesen Bedingungen verläuft entgegen den theoretischen und praktischen Erfahrungen. Der Reaktionsprozeß, Umsetzung des überschüssigen Kalziumhydroxyds aus dem Zement mit dem latenthydraulischen Kieselsäurelieferanten, erfolgt bei Raumtemperatur beim Normalbeton erst wesentlich später; je nach Mahlfeinheit nach 90 Tagen bis zu einem Jahr.

Beispiel 7:

Als Dispergator diente Alkylnaphthalinsulfonsäure-Formaldehydkondensat.

Beispiel 8:

Als Dispergator diente ein wasserlösliches, niedermolekulares Polyacrylamid.

Der Dispergator in den Beispielen 9 und 10 war eine Mischung aus synthetischem Naphthalinsulfonsäure-Formaldehydkondensat und aus natürlichem Kalziumligninsulfonat. Auch im Beispiel 10 ist die Entwicklung der Betondruckfestigkeit aus dem Mischbindemittel, entgegen den Erfahrungen, nicht nur bei 7, auch bei 28 Tagen überraschend hoch.

Im Beispiel 11 ist trotz niedrigerem W/Z-Wert aufgrund des höheren Dispergatorgehaltes, u. zw. Phenolformaldehydharz, ein Ausbreitmaß von 54 cm gegeben.

Die Dispergatoren sind am Markt erhältliche Verbindungen und können beispielsweise von der Firma Chemco Bausysteme Ges.m.b.H., Wien, bezogen werden.

Bei den Beispielen 4, 7, 8, 10 und 11 liegt freier, nicht abgebundener, Zement vor. Durch Biegebeanspruchung eines Probekörpers mit den Abmessungen 12 cm x 12 cm x 36 cm ist ein Riß des Querschnittes eingetreten. Die beiden Teile des Probekörpers wurden sodann 28 Tage in Wasser gelagert und dabei gegeneinander gehalten. Anschließend bei 105° C getrocknet. Im Bereich des Risses wurde sodann die Wasserundurchlässigkeitsprüfung gemäß ÖNORM B 3303 durchgeführt. Dabei betrug die Wassereindringtiefe nur im Rißbereich 11 mm.

| Probe Nr. | Bindemittel-gehalt | | | W/Z-Wert bzw. W/B | Wasser | natürliches Ligninsulfonat als Feststoff | | synthet.Plastif. Dispergator *) als Feststoff | | Konsistenz Ausbreitmaß |
|---|---|---|---|---|---|---|---|---|---|---|
| | PZ375 | PZ275 | FLA. | | kg/m³ | % v.ZG | kg/m³ | % v.ZG | kg/m³ | cm |
| | k g / m³ | | | | | | | | | |
| 1 | 320 | – | – | 0,61 | 195 | – | – | – | – | 44 |
| 2 | 320 | – | – | 0,54 | 173 | – | – | 2,0 | 6,4 | 46 |
| 3 | 320 | – | – | 0,25 | 80 | – | – | 5,5 | 17,6 | 45 |
| 4 | 365 | – | – | 0,24 | 87 | – | – | 7,0 | 25,5 | 47 |
| 5 | – | 384 | – | 0,27 | 104 | – | – | 6,0 | 23,0 | 50 |
| 6 | 255 | – | 110 | 0,25 | 91 | – | – | 6,0 | 22,0 | 49 |
| 7 | 360 | – | – | 0,23 | 82 | – | – | 5,5 | 19,8 | 41 |
| 8 | 417 | – | – | 0,24 | 100 | – | – | 7,0 | 29,2 | 43 |
| 9 | – | 308 | – | 0,26 | 81 | 0,5 | 1,54 | 6,2 | 19,2 | 48 |
| 10 | 308 | – | 130 | 0,23 | 100 | 0,5 | 2,19 | 5,6 | 24,7 | 40 |
| 11 | 425 | – | – | 0,22 | 94 | – | – | 9,3 | 39,5 | 54 |

*) Der Feststoffgehalt an synthetischen Dispergatoren oder Verflüssigern in den Versuchen betrug 25 Gew.-%; im W/Z-Wert ist, entsprechend den beigesetzten Massen, das Lösungswasser berücksichtigt.

| Zuschläge 0/32 mm kg/m³ | Frisch-raumge-gewicht kg/m³ | R a u m g e w i c h t k g / m³ Prüfalter | | | | D r u c k f e s t i g k e i t N / m m² Prüfalter | | | | Wasseraufnahme Vorbeh.24h bei 105°C Probe Alter | H₂O-Aufn.n.48h kg/m³ | HR-Gehalt auf 1 m³ Beton x Vol.-% |
|---|---|---|---|---|---|---|---|---|---|---|---|---|
| | | 7 Tg | 28 Tg | 56 Tg | 90 Tg | 7 Tg | 28 Tg | 56 Tg | 90 Tg | | | |
| 1839 | 2354 | 2340 | 2310 | 2300 | 2300 | 25,2 | 32,4 | 35,2 | 37,0 | 28 | 100 | 10,0 |
| 1900 | 2400 | 2360 | 2340 | 2330 | 2330 | 31,0 | 39,4 | 42,0 | 44,0 | 28 | 84 | 8,4 |
| 2066 | 2483 | 2470 | 2470 | 2470 | 2470 | 56,3 | 70,7 | 72,0 | 73,0 | 28 | 10 | 1,0 |
| 2005 | 2482 | 2475 | 2470 | 2468 | 2464 | 64,3 | 74,5 | 76,0 | 76,0 | 28 | 8 | 0,8 |
| 1962 | 2473 | 2470 | 2460 | 2460 | 2460 | 49,2 | 62,5 | 65,0 | 67,3 | 28 | 8 | 0,8 |
| 1980 | 2458 | 2447 | 2440 | 2440 | 2440 | 47,2 | 70,9 | 73,0 | 74,0 | 28 | 9 | 0,9 |
| 2025 | 2487 | 2480 | 2470 | 2470 | 2470 | 63,5 | 77,7 | 80,0 | 81,3 | 28 | 7 | 0,7 |
| 1965 | 2511 | 2505 | 2500 | 2500 | 2500 | 75,5 | 84,2 | 87,0 | 88,2 | 28 | 4 | 0,4 |
| 2076 | 2485 | 2477 | 2474 | 2470 | 2470 | 49,8 | 63,1 | 67,0 | 67,5 | 28 | 7 | 0,7 |
| 1950 | 2515 | 2510 | 2500 | 2500 | 2495 | 54,9 | 75,2 | 78,3 | 80,2 | 28 | 5 | 0,5 |
| 1975 | 2533 | 2530 | 2530 | 2530 | 2530 | 81,0 | 83,0 | 84,0 | 86,2 | 28 | 4 | 0,4 |

x) Kapillarporengehalt und Verdichtungsporenhohlraum aus dem Mischprozeß

EP 0 417 064 A2

**Ansprüche**

1. Bauteil mit einer Mischung mit einem hydraulischen Bindemittel mit Zement, z. B. Portlandzement, Hochofenzement od. dgl., gegebenenfalls einem latenthydraulischen Bindemittel, z. B. Flugasche, mit Verflüssiger und/oder Dispergator in einer Menge von über 4 Gew.-%, vorzugsweise über 5 Gew.-%, bezogen auf den eingesetzten Zement, Zuschlägen, insbesondere mit einem Größtkorn von 18 bis 50 mm, gegebenenfalls mit einer Bewehrung aus Stahl, Fasern, Kunststoff od. dgl., dadurch gekennzeichnet, daß der Bauteil mit einer durch Rütteln verdichteten Mischung aufgebaut ist und eine Kapillaraszension von 0,1 bis 1,2 Vol.-%, insbesondere 0,4 bis 0,6 Vol.-%, aufweist.

2. Bauteil nach Anspruch 1, dadurch gekennzeichnet, daß er 5,0 bis 10,0 Gew.-%, insbesondere 6,0 bis 9,0 Gew.-%, bezogen auf den eingesetzten Zement, Verflüssiger und/oder Dispergatoren aufweist.

3. Bauteil nach Anspruch 1 oder 2, dadurch gekennzeichnet, daß die Mischung Dispergatoren und/oder Verflüssiger mit höchstens 0,5 Gew.-%, bezogen auf das Zementgewicht, natürliche Ligninsulfonate aufweist.

4. Bauteil nach Anspruch 1, 2 oder 3, dadurch gekennzeichnet, daß er 10,0 bis 20,0 Gew.-%, insbesondere 15,0 bis 17,0 Gew.-%, Portlandzement, bezogen auf den Festbeton, ohne Bewehrung aufweist.

5. Bauteil nach einem der Ansprüche 1 bis 4, dadurch gekennzeichnet, daß der Zement $C_3A$ frei ist.

6. Bauteil nach einem der Ansprüche 1 bis 5, dadurch gekennzeichnet, daß er nichtabgebundenen Zement, insbesondere bis zu 15 Gew.-%, bezogen auf die Gesamtmenge des Zementes, aufweist.

7. Bauteil nach Anspruch 6, dadurch gekennzeichnet, daß der nichtabgebundene Zement pulverförmig und feinverteilt vorliegt.

8. Verfahren zur Herstellung eines Bauteiles, insbesondere nach einem der Ansprüche 1 bis 7, wobei einer Mischung mit einem hydraulischen Bindemittel mit Zement, z. B. Portlandzement, Hochofenzement od. dgl., gegebenenfalls einem latenthydraulischen Bindemittel, z. B Flugasche, Zuschlägen, insbesondere mit einem Größtkorn von 18 bis 50 mm, Verflüssigern und/oder Dispergatoren mit Wasser abbinden gelassen wird, dadurch gekennzeichnet, daß einer Mischung und/oder zumindest einem Bestandteil desselben insgesamt, den Wassergehalt der Bestandteile eingeschlossen, bezogen auf den Zement, 22,0 bis 28,0 Gew.-% Wasser und 5,0 bis 10,0 Gew.-%, insbesondere 6,0 bis 9,0 Gew.-% , bezogen auf den Zement, Verflüssiger und/oder Dispergatoren zugesetzt wird, und die so erhaltene Mischung homogenisiert in eine Form, z. B. zweiseitig offene Form, verbracht und durch Rütteln verdichtet und anschließend abbinden gelassen wird.

9. Verfahren nach Anspruch 8, dadurch gekennzeichnet, daß 25,0 bis 27,0 Gew.-% Wasser, den Wassergehalt der Bestandteile eingeschlossen, bezogen auf den Zement, zugegeben wird.

10. Verfahren nach Anspruch 8 oder 9, dadurch gekennzeichnet, daß bis 0,5 Gew.-%, bezogen auf den Zementgehalt, natürliche Ligninsulfonate zugegeben werden.

11. Verfahren nach einem der Ansprüche 8 bis 10, dadurch gekennzeichnet, daß die Mischung vor der Formgebung, vorzugsweise während des Mischvorganges temperiert, insbesondere auf 4 bis 12˚ C gekühlt wird.

12. Verfahren nach Anspruch 11, dadurch gekennzeichnet, daß die Mischung vor der Formgebung auf 20˚ bis 35˚ C temperiert wird.

13. Verfahren nach einem der Ansprüche 8 bis 12, dadurch gekennzeichnet, daß der Verflüssiger und/oder Dispergator in Wasser gelöst bzw. dispergiert zugegeben wird.

14. Verfahren nach einem der Ansprüche 8 bis 13, dadurch gekennzeichnet, daß der Verflüssiger und/oder Dispergator als Mischung mit dem Zement zugegeben wird.

15. Mischung, insbesondere nach einem der Ansprüche 1 bis 14, mit einem hydraulischen Bindemittel mit Zement, z. B. Portlandzement, Hochofenzement od. dgl., gegebenenfalls latenthydraulischem Bindemittel, z. B. Flugasche, Zuschlägen, insbesondere mit einem Größtkorn von 18 bis 50 mm, Verflüssigern und/oder Dispergatoren in einer Menge über 4,0 Gew.-%, vorzugsweise über 5,0 Gew.-%, bezogen auf den Zementgehalt, und Wasser, dadurch gekennzeichnet, daß die Mischung 22,0 bis 28,0 Gew.-%, insbesondere 24,0 bis 27,0 Gew.-% Wasser, bezogen auf den Zementgehalt, aufweist und eine Verarbeitbarkeit nach ÖNORM B 4200, 10. Teil, in den Konsistenzklassen K1 bis K4 aufweist.

16. Mischung nach Anspruch 15, dadurch gekennzeichnet, daß sie 5,0 bis 10,0 Gew.-%, insbesondere 6,0 bis 9,0 Gew.-%, bezogen auf den Zementgehalt, Verflüssiger und/oder Dispergatoren aufweist.

17. Mischung nach Anspruch 15 oder 16, dadurch gekennzeichnet, daß sie bis zu 0,5 Gew.-%, bezogen auf den Zementgehalt, natürliche Ligninsulfonate aufweist.

18. Mischung nach Anspruch 15, 16 oder 17, dadurch gekennzeichnet, daß sie als Verflüssiger und/oder Dispergatoren Naphtalinsulfonsäure-Formaldehydkondensate aufweist.

19. Zement, insbesondere nach einem der Ansprüche 1 bis 18, dadurch gekennzeichnet, daß er 5,5 bis 10,0-Gew.-%, vorzugsweise 6,0 bis 9,0 Gew.-%, Verflüssiger und/oder Dispergatoren enthält.